## Europäisches Patentamt

## European Patent Office

## Office européen des brevets

(11) Publication number: **0 160 999**
**B1**

## EUROPEAN PATENT SPECIFICATION

(45) Date of publication of patent specification: **29.08.90**

(51) Int. Cl.⁵: **G 01 B 9/02**

(21) Application number: **85105739.8**

(22) Date of filing: **10.05.85**

(54) Position measuring device.

(30) Priority: **11.05.84 JP 93929/84**

(43) Date of publication of application:
**13.11.85 Bulletin 85/46**

(45) Publication of the grant of the patent:
**29.08.90 Bulletin 90/35**

(84) Designated Contracting States:
**DE FR GB**

(56) References cited:
**GB-A-2 049 335**
**GB-A-2 117 511**
**US-A-3 458 259**
**US-A-4 053 231**
**US-A-4 319 839**

(73) Proprietor: **Hewlett-Packard Company**
**3000 Hanover Street**
**Palo Alto California 94304 (US)**
(73) Proprietor: **Mitaka Kohki Co., Limited**
**5-1-4, Ohsawa**
**Mitaka-shi Tokyo (JP)**

(72) Inventor: **Hashimoto, Ichiro**
**Takao Park Haitsu A-1319 1227-4, Hatsuzawa-cho**
**Hachioji-shi Tokyo (JP)**
Inventor: **Nakamura, Katsushige**
**5-1-4, Ohsawa**
**Mitaka-shi Tokyo (JP)**

(74) Representative: **Patentanwälte Kohler -
Schwindling - Späth
Hohentwielstrasse 41
D-7000 Stuttgart 1 (DE)**

Courier Press, Leamington Spa, England.

## Description

The present invention relates to a position measuring device for measuring distances. Interferometer systems are well-known as high resolution measuring systems for determinating specific positions in integrated circuit manufacturing.

An interferometer system of the known kind has been described in US Patent 3,458,259. This instrument, which measures changes in relative distance, comprises a laser head, a reflecting mirror (e.g. a cube corner mirror) which is installed on a system to be controlled and disposed coaxially along the optical axis defined by the laser beam from the laser head, and an interferometric apparatus coupled to the transmitted and the reflected laser beam for measuring changes in distance between the laser head and the reflecting mirror.

In the known instrument, however, the reflecting mirror must always be positioned along the optical axis of the laser beam and consequently the instrument cannot measure the distance to a system to be controlled moving freely and independently in space. Because of the use of the doppler effect in measuring, only a change (a movement) in relative distance can be measured (relative value measurement), that is, the length from a start point of the travel of the reflecting mirror to an end point, but not an absolute distance measurement (absolute value measurement), can be produced. Only the system to be controlled, wherein the reflecting mirror is mounted, follows control instructions (e.g. moving commands from a computer). No corresponding control signals are transferred to the laser head so that no system control exists between the objects set forth. Therefore the available space, within which the system to be controlled can move freely, is very limited. There is always required extended time for an alignment operation in such a length measurement. When the reflecting mirror moves from point A to point B at a maximum distance ajustments are needed on the side of the laser head and/or the side of the system to be controlled in order to keep the irradiation by the reflected laser beam in a fixed position on the laser head side during travel in the range between point A and point B.

The present invention is concerned with avoiding the described disadvantages of the prior art. An object of the present invention is to provide a position measuring device which can measure relative values of distance even when the reflecting mirror moves freely in space.

As claimed, the present invention can provide a relative distance measurment when the reflecting mirror moves freely in space. The measurement is produced as follows. The laser beam generating section, which includes a main laser head, an optical detector, an angular encoder, etc., is mounted on a two-axis gimbal apparatus. The laser beam reflecting section, which includes a reflecting mirror (cube corner mirror), an optical detector, etc., is monted on a second two-axis gimbal apparatus. The main laser head and auxiliary laser head are kept in coaxial location with the previously mentioned two-axis gimbal apparatus. Both two-axis gimbal apparatus are provided with motors. The motors are automatically controlled to maintain the laser beam generated by the laser head at a fixed position on the reflecting mirror. This means that the laser beam generating system is always controlled to track the reflecting mirror, even during movement. The measurement is thus continuous without any interrupting aligment operation, which is made possible by contributing intelligence to both of the system to be controlled and the controlling system.

A further object of the invention is to enable the position measuring device to measure absolute values of distance when the reflecting mirror moves freely in space.

This measurement will now be explained. According to claim 9, the absolute value measurement apparatus installed within the interferometer is used along with the described automatic tracking functions for absolute value measurements. This apparatus comprises a movable stage including an interferometer system as described in USP 3,458,259. It measures absolute distance (absolute location) from the center of a gimbal rotation (standard point) to the measuring point of the reflecting mirror, also known as a nodal point, based on the distance that the reflecting mirror moves along the stage and on the angle of rotation of the two-axis apparatus in the laser generating section. Thus the absolute distance measurement in case that the reflecting mirror is moving freely in space can be produced from the absolute location obtained as described above and from the relative distance measurement aforedescribed, thus giving the absolute distance measurement as the result.

Exemplary embodiments of the invention will now be described in detail with reference to the accompanying drawings.

Fig. 1 is an exploded perspective diagram of a position measuring device in accordance with the present invention.

Fig. 2 is a perspective diagram of a laser beam generating section.

Fig. 3 is a perspective diagram of a part of the laser beam reflecting section.

Fig. 4 is a perspective diagram of a part of the laser beam generating section.

Fig. 5 through Fig. 15 and Fig. 17 through Fig. 19 explain the measurement operation of the present device.

Fig. 16 shows an embodiment of the present invention in which a robot is used as the object to be controlled and the laser beam reflecting section is mounted on its arm.

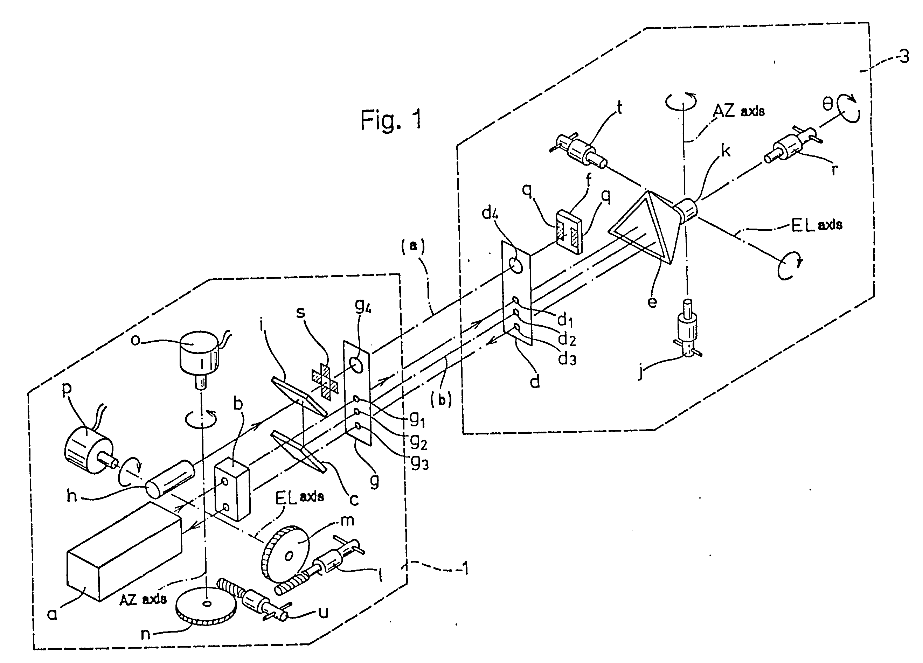

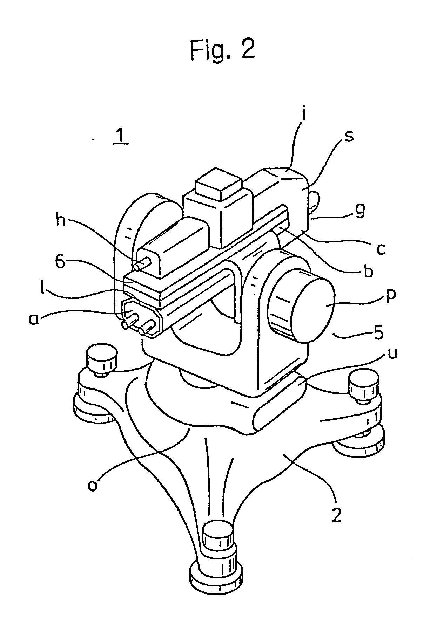

An exploded perspective diagram of an embodiment of the position measuring device of the present invention is presented in Fig. 1. Fig. 2 is a perspective diagram of a laser beam generating section of an interferometer system. Fig. 4 is a perspective diagram of a part of the laser beam reflecting section. As shown in the drawings just mentioned, the laser beam generating section 1 is comprised of a two-axis gimbal apparatus that can rotate independently around an elevation axis EL and an azimuth axis AZ. Rotation around the rotational axis EL is operated by a motor 1 and a gear m. A laser transducer a is located under the fixed base 6 of gimbal apparatus 5 (shown in Fig. 4). The laser transducer a contains detecting means to synthesize from a reference and reflecting beams, and a main laser head. An interferometer b, which is a passive apparatus to eliminate deadband as described in U.S. Patent 3,458,259, is located just in front of the laser transducer a and a half mirror c, and a mask g follows. The laser beam for measuring length generated by laser transducer a passes the interferometer b, the half mirror c and a hole $g_1$ of the mask g toward the laser beam reflecting section and then reflects back through a hole $g_3$ of mask g, through half mirror c and the interferometer b. Further it is synthesized with a reference laser beam and finally reflects back to the laser transducer a. An auxiliary laser h is located above fixed base 6 coaxially with the main laser head. The laser head h is instrumental in providing length measurement when the laser beam reflecting section 3 is freely moving in space. A semi-reflecting mirror i, a reflecting mirror f and a 4-direction readjust sensor s are located in front of the auxiliary laser h. The laser beam generated by the auxiliary laser h is separated with the semireflecting mirror i. One of the separated laser beams (a) passes via the 4-direction readjust sensor s through a hole $g_4$ of mask g to the laser beam reflecting section 3 and reflects back to the 4-direction readjust sensor s. The other separated laser beam (b) is reflected by the semireflective mirror c and through the hole $g_2$ of mask g and irradiates a 4-direction readjust sensor k of the laser beam reflecting section 3.

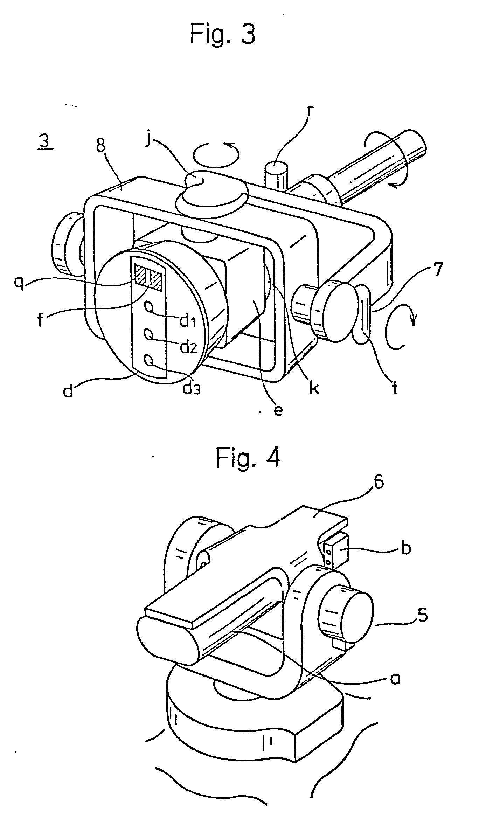

The parts described above are mounted together as shown in Fig. 2 and fixed by the gimbal axis EL. The AZ axis is located on a 3-point support member. An encoder which detects an angle of rotation, such as a high sensivity EL axis encoder p producing many electric pulses per moving angle, and an AZ axis encoder o are installed within the gimbal apparatus 5. The laser beam reflecting section 3 is composed as shown in Fig. 1 and/or 3. Fig. 3 is a perspective view of the laser beam reflecting section 3. The laser beam reflecting section 3 includes a two-axis gimbal apparatus which can rotate freely around both the EL and the AZ axis. The laser beam, generated by the transducer a, passes through the hole $d_1$ of mask d to a reflecting mirror e (cube-corner mirror) and reflects back through the hole $d_3$ of mask d. The laser beam which incides on the laser beam reflecting section 3 via the hole $g_4$ of mask g is concurrently irradiating and reflected back through the hole $d_4$ to the laser beam generating section 1 by a detecting sensor s and a reflecting gradient detector mirror f (for normal use).

The auxiliary laser beam transmitted through the hole $g_2$ of mask g in the laser beam generating section 1 is incident through the hole $d_2$ of mask d and irradiates a 4-direction readjust sensor k. The 4-direction readjust sensor k controls the laser beam generating section 1 to keep the irradiating laser beam at the center of said sensor k, which will be described in detail later. Each of the members f, d, e and k previously described, are mounted in the sensor section shown in Fig. 3 and can also rotate together around the AZ axis by a motor j. The rotational axis AZ frame section 8 rotates by a motor t for rotation around the EL axis. Furthermore the EL axis section and the AZ axis section are entirely rotated with θ by a motor r. The rotation mechanisms for motor j, t and r (e.g. gear) are not shown in these Figures.

From the description of the figures, it will be apparent that the laser beam generated by the main laser a is used for measuring length. The other component members provide the automatic tracking mechanism that can keep the laser beam generated by the main laser transducer a incident on and reflected from the determinated place of the reflecting mirror when the reflecting mirror e is installed on an object to be controlled (e.g. robot).

Initialization and automatic tracking operation

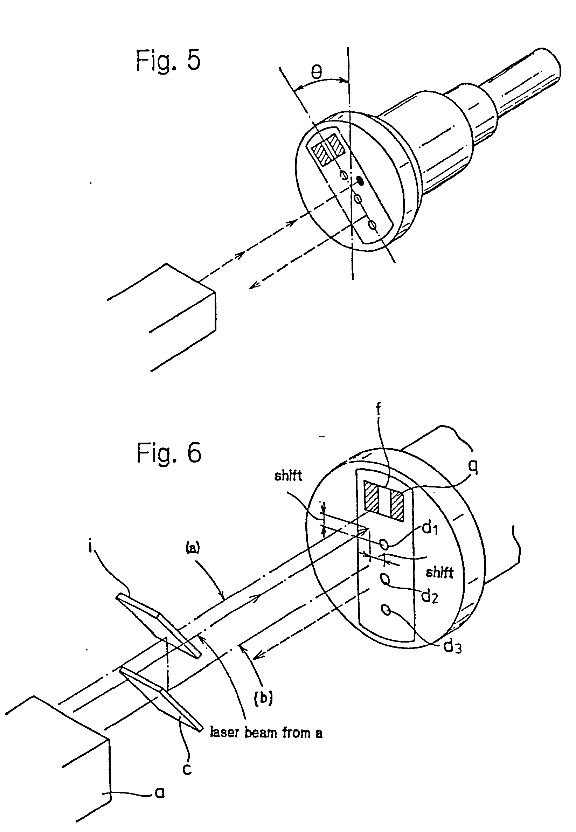

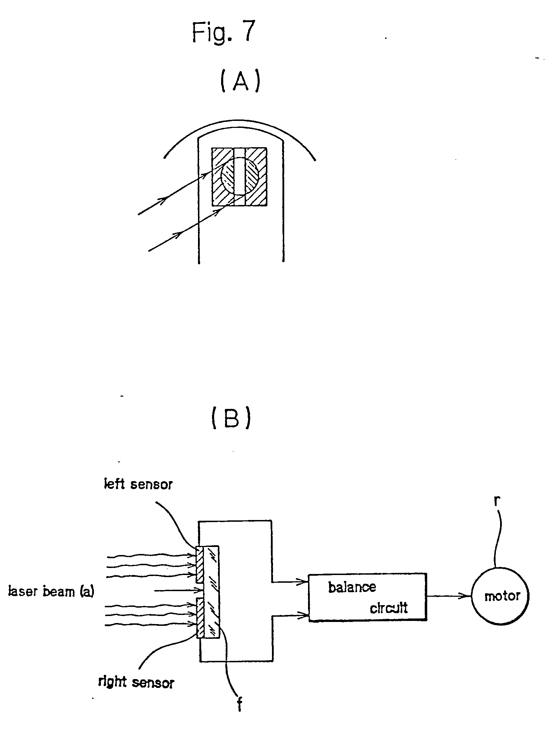

When the laser beam generating section 1 and the laser beam reflecting section 3 are accurately aligned, the main laser beam should enter the hole $d_1$ and pass through the hole $d_3$ (this can be checked by eyes). This should always be the case even when the reflecting mirror e moves freely in space. Such operation is now described as follows. Assume that the reflecting mirror (cube corner mirror e) shifts with θ degrees as shown in Fig. 5. The sensor section may be rotated by driving motor r either manually or automatically. Assume that, as shown in Fig. 6, one separated beam, which has been generated by auxiliary laser head h, is incident on the left (or right) side of the detecting sensor q. It should be noticed that the laser beam generated by transducer a would reach the mask d, but not be incident on the hole $d_1$. The sensor q is composed of left and right sensors which are located on a reflecting mirror f (planar mirror) at a fixed distance. The laser beam (a) is now supposed to be irradiating the left sensor which generates signals through a balancing circuit for counterclockwise rotation by motor r as shown in Fig. 7. Accordingly, the motor r is rotated until equal amounts of laser radiation are incident on the right and left sensors, that is, to have the same output signals from both sensors.

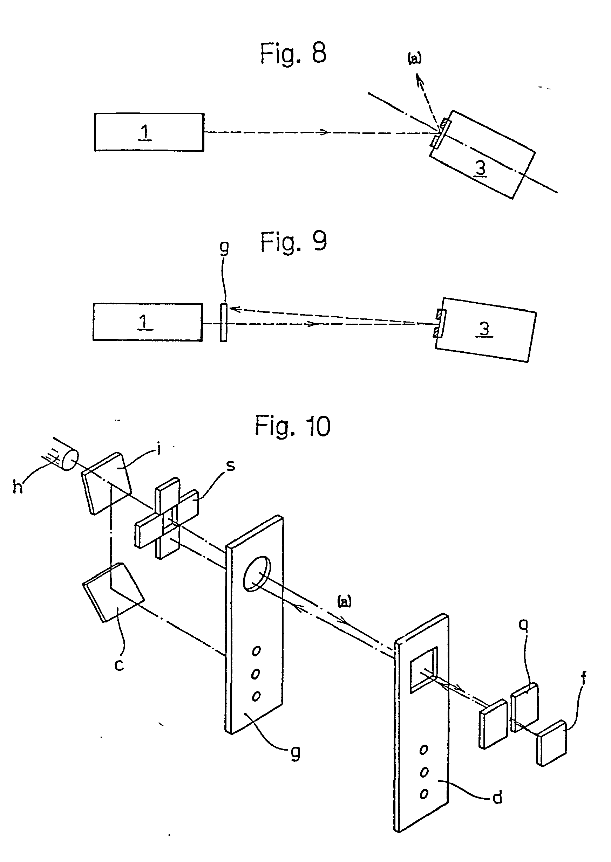

Since a planar mirror f is installed between the right and the left sensors, the laser beam, which irradiates the sensors, would reflect toward the laser beam generating section 1. However when the left and right sensors q are balanced with the laser beam reflecting section 3 being shifted as shown in Fig. 8, the reflected beam (a) passes along the direction indicated by an arrow in the figure. In this case however, the reflected beam (a) will be brought into incidence into the large hole $g_4$ of mask g by driving motor j, t and/or r, u either manually or automatically. When the reflected beam (a) is incident into hole $g_4$, it irradiates the 4-direction readjust sensor s which is in control of cube-corner mirror e (see Fig. 10). The readjust sensor s has a through hole in the center and four sensors located at the upper, lower, left and right side of the through hole. An important function of the readjust sensor is to control four directions.

When the reflected beam (a) passes through the hole $g_4$, the optical axis of the laser generation section 1 and the reflecting section 3 is kept adjusted by automatic sevo action.

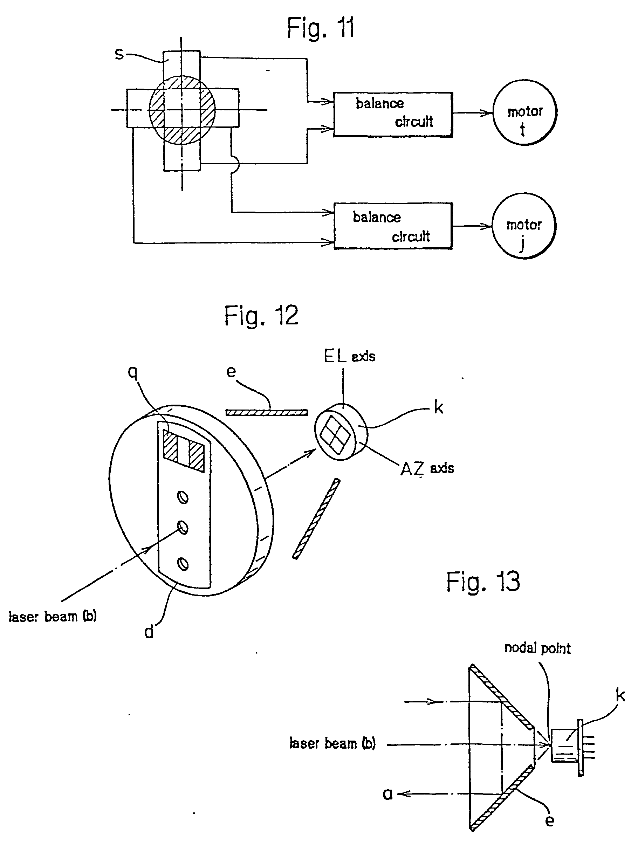

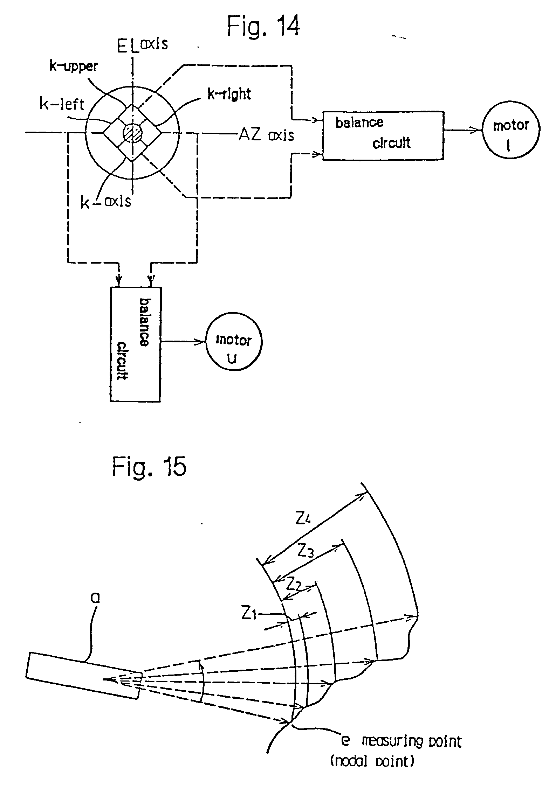

Now it should be checked by eyes that the beam (b) is incident into the hole $d_2$ of mask d. The laser beam (a), as described above, is automatically guided by sensor q and s, but it has not yet been described how the laser beam (b) is guided through hole $d_2$. To accomplish this, the laser beam (b) is forcedly guided into the hole $d_2$ in mask d by driving motor u either automatically or manually. Fig. 12 shows the cube-corner mirror e located behind the mask d and the 4-direction readjust sensor k located at the center of its optical axis which is positioned as a nodal point. The position of sensor k is fixed at a corresponding location with the EL axis and the AZ axis of the gimbal apparatus, that is, the fixed position is at the nodal point. The nodal point position is a measuring point for an absolute length measurement which will be described later (referring to Fig. 13). The position of the nodal point is the position of the vertex of the reflecting mirror. When a prism cube-corner mirror is used as a reflecting mirror, the refractive index of the prism materials will be important. Sensor k comprises four sensors which spread over 4 directions as shown in Fig. 12 and 14. These drawings also show that the motor 1 in the laser beam generating section 1 which rotates the gimbal apparatus around the EL axis and the motor u which rotates the gimbal apparatus around the AZ axis are controlled to keep equal amounts of irradiation on the upper and lower left and right sensors so that the laser beam (b) irradiates the center of the sensor. Sensors k and s are subsequently moved automatically by the afore mentioned servo operation to control aligment of the optical axis.

When the laser beam (a), generated by the auxiliary laser head, returns back to the fixed position of the sensor s and when the laser beam (b) irradiates the desired place of sensor k, the main laser beams (a) and (b) are coaxial so that the optical axis of the main laser beam is automatically adjusted and the beam will pass through the hole $d_1$ of the mask d, be reflected by the reflecting mirror and then back to the interferometer 6 while passing through the hole $d_3$ of the mask. Since the laser beam from the auxiliary laser h is used to control any movement, even when the reflecting mirror e (system to be controlled) freely moves in space, the laser beam generating section 1 and laser beam reflecting section 3 are maintained in alignment provided by the automatic tracking operation of the servo mechanisms.

Relative value measurement

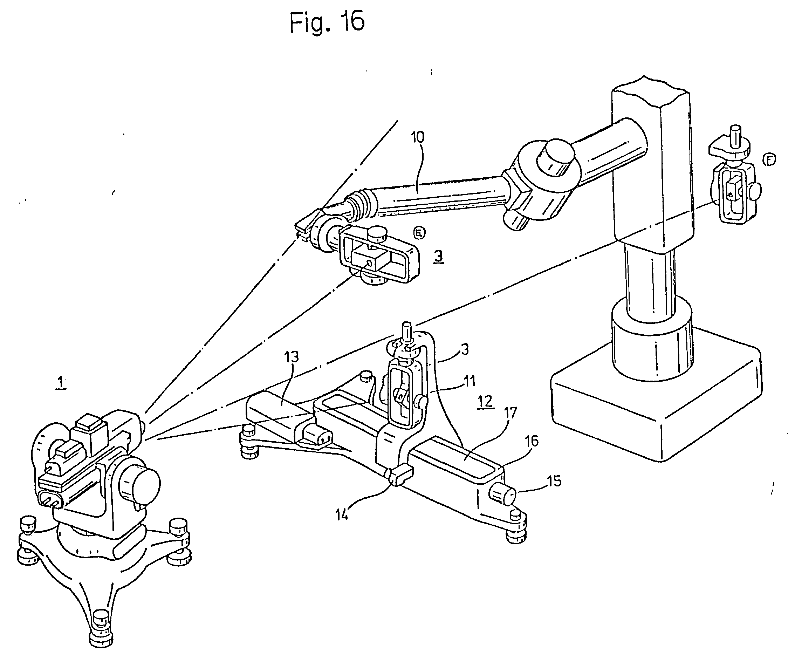

Fig. 15 shows that when the reflecting mirror e, or in other words, the measurement point of sensor k moves independently, the relative distance $z_1$—$z_4$ can be measured by the automatic tracking operation described above. Fig. 16 shows a practical embodiment of the present invention in which a robot is used as a system to be controlled and the laser reflecting element is located on its arm. The external appearance of the reflecting section 3 of Fig. 16 quite differs from the one shown in Fig. 3, but basically both have same function. The laser reflecting section 3 is installed within an arm 10 of the robot and the measurement may proceed as described after the afore-described initialization. With this embodiment, automatic tracking operation takes place in correspondence to the movement of the arm 10 of the robot. For example, the robot arm 10 moves independently from a point E to point F.

Absolute value measurement

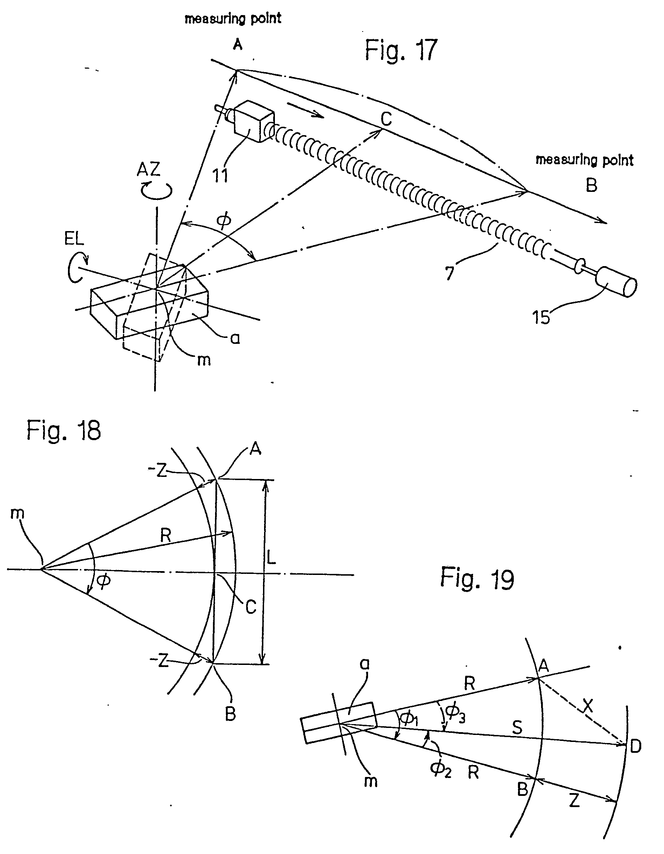

An additional test fixture with an interferometer is used as shown in Fig. 16 for measuring absolute values. Fig. 17 shows the principle of such a measurement. In order to measure absolute values, measuring the distance from a standard point to the measuring point (standard absolute position measurement) is necessary. The standard point is the center of the gimbal rotation of the laser transducer a in the laser generating section 1. The measuring point is the nodal point of the reflecting mirror e in the beam reflecting section 3. As shown in Fig. 16, the test fixture 12 is comprised of a movable stage 11 carrying a laser beam reflecting section 3. An auxiliary laser beam generating section 13 for measuring length is located at one end of the fixed base 16 for movable stage 11 and an auxiliary laser beam reflecting section 14 for measuring length is located on the movable stage 11 respectively. The movable stage 11 is controlled by a motor 15, and may, for example, move linearly along a screw 17. The method of measuring absolute distance is now described with reference to Fig. 17 and 18. This measurement should be made after the initialization is completely done. A measurement point is moved linearly from a point A to a point B along the direction shown by an arrow in these figures. If the measurement point moves along radius R (the distance from the standard point of the laser transducer a to the measuring point), the measured distance will not vary but in case of a linear movement, it decreases and approaches a minimum at point C, and increases back to the same value (or zero difference) at point B. The radii form an isosceles triangle. The distance L (distance between points A and B) is measured by the laser 13 and the reflecting section 14 for measuring length. The rotational angle $\phi$ is measured by the AZ axis encoder o. Then the radius R is calculated with the value of L and $\theta$. Thus the distance from the center m of gimbal rotation in the laser beam generating section 1 to measuring point A or B is obtained.

The method of measurement in the case of a reflecting mirror moving freely in space is described next. At first, the laser beam reflecting section 3 is set to a test fixture 12 and a standard absolute position measurement for each measuring point as just explained above should be produced. Then the robot arm 10 holds the laser beam reflecting section 3, and moves freely in space. For instance, in Fig. 19 assume that the measuring point is moving in the order of A—B—D on the same plane as to simplify explanation and consider the absolute distance measurement to measuring point D. From the explanation in accordance with Fig. 17 and 18, the position of the measuring point B is obtained. Consequently the distance Z from measuring point B to D can be obtained from a relative value measurement and the distance S between the center m of rotation and the measuring point D is obtained Also the rotational angle $\phi_3$ is calculated from the rotational angle $\phi_2$. Thus the distance X between A and D and the absolute position of the measuring point D can be measured. Even as the reflecting mirror e moves freely, the absolute position of the moving measuring point can be measured by performing an absolute position measurement, a relative value measurement and a rotation angle measurement with the AZ and EL axis encoders o, p.

When the present invention is applied to robot operation, the moving position of a robot can be controlled by issuing instructions about the desired position for movements. Thus the coordination of a robot system corresponds to the coordination of the laser system.

Since both a relative and an absolute measurement of the distance to the reflecting mirror moving freely in space can be made, the measurement of the position to where the system to be controlled has moved, and furthermore a moving of the system to be desired (assigned) position can be accomplished. The laser generating section and the laser beam reflecting ·section are aligned initially and then an automatic tracking operation is always performed, so that the measurement time can be shortened greatly for the alignment operation inherent in laser measurement of length.

## Claims

1. A position measuring device comprising
—laser beam generating means (1), located on a first two-axis gimbal apparatus (5) allowing rotation of this laser beam generating means about orthogonal first and second axes (EL, AZ), having a main laser (a) for generating a main laser beam and an auxiliary laser (h) for generating an auxiliary laser beam that is substantially parallel to the main laser beam,
—laser beam reflecting means (3) located on a second two-axis gimbal apparatus (8), allowing rotation of this laser beam reflecting means about orthogonal third and fourth axes (EL, AZ), having reflecting means (e, f) for reflecting the main laser beam and the auxiliary laser beam, and having first sensing means (k, q) for detecting and signaling the position of the auxiliary beam, and
—second sensing means (s) located on the first gimbal apparatus for detecting and signaling the position of the reflected auxiliary laser beam.

2. A position measuring device as in claim 1 further comprising
—distance measuring means coupled to the main laser beam and the reflected main laser beam for measuring changes in distance between the main laser (a) and the reflecting means (e, f), first and second servo means (p, o) coupled to the first sensing means (k, q) and operative to actuate the first gimbal apparatus (5) for rotation about the first and second axes (EL, AZ) to keep the position of the auxiliary laser beam fixed on the first sensing means (k, q), and
—third and fourth servo means (t, j) coupled to the second sensing means (s) and operative to actuate the second gimbal apparatus (8) for rotation about the third and fourth axes (EL, AZ) to keep the position of the reflected portion of the auxiliary laser beam fixed on the second sensing means (s).

3. A position measuring device as in claim 1 further comprising
—distance measuring means coupled to the main laser beam and the back-reflected laser beam for measuring changes in distance between the laser and the reflecting means,
—first and second servo means (p, o) coupled to the first sensing means (k, q) and operative to actuate the first gimbal apparatus (5) for rotation about the first and second axes (EL, AZ) to keep the position of the auxiliary laser beam fixed on the first sensing means (k, q), and
—third and fourth servo means (t, j) coupled to the second sensing means (s) and operative to actuate the second gimbal apparatus (8) for rotation about the third and fourth axes (EL, AZ) to keep the position of the reflected portion of the auxiliary laser beam fixed on the second sensing means (s).

4. A position measuring device as in one of claims 1 through 3 wherein the reflecting means (e, f) includes a cube-corner retroreflector (e).

5. A position measuring device as in one of claims 1 through 4 wherein the reflecting means (e, f) can be rotated around a fifth axis ($\theta$) which is perpendicular to the third and fourth axes (EL, AZ).

6. A position measuring device as in claim 5 wherein the auxiliary laser beam is separated into a first ((b)) and a second ((a)) auxiliary beam, wherein said first sensing means (k, q) includes a two-direction sensor (q) having a pair of optical detectors (q) for sensing the position of the second auxiliary beam ((a)), and further comprising fifth servo means (r) coupled to the two-direction sensor (q) and operative to actuate rotation of the reflecting means about the fifth axis ($\theta$) to keep the position of the second auxiliary beam ((a)) fixed on the two-direction sensor (q).

7. A position measuring device as in claim 6 wherein said first sensing means (k, q) includes a four-direction sensor (k) having four optical detectors (k-upper, k-lower, k-left, k-right) located around a nodal point of the reflecting means (e, f) for detecting the first auxiliary beam ((b)) and for controlling the rotation of the first gimbal apparatus (5) separately for both axes.

8. A position measuring device as in claim 7 wherein the second sensing means (s) includes a second four-direction sensor (s) having four optical detectors located to detect a reflected portion of the second auxiliary beam ((a)) and for controlling the rotation of the second gimbal apparatus (5) separately for both axes.

9. A position measuring device as in one of claims 1 through 8 further comprising an absolute length measuring test fixture (12) having a fixed base and a stage (11) linearly movable on the fixed base, wherein the stage (11) is adapted to removably carry the second gimbal apparatus (8).

**Patentansprüche**

1. Lagemeßanordnung enthaltend
—Laserstrahlerzeugungsmittel (1), die sich auf einem ersten Zweiachsen-Kardangerät (5) befinden, das die Drehung der Laserstrahlerzeugungsmittel um eine erste und eine zweite dazu senkrechte Achse (EL, AZ) gestattet, und die einen Hauptlaser (a) zur Erzeugung eines Hauptlaserstrahls und einen Hilfslaser (h) zur Erzeugung eines Hilfslaserstrahls haben, der im wesentlichen parallel zum Hauptlaserstrahl ist,
—Laserstrahlreflexionsmittel (3), die auf einem zweiten Zweiachsen-Kardangerät (8) angeordnet sind, das die Drehung der Laserstrahlreflexionsmittel um eine dritte und dazu senkrecht stehende vierte Achse (EL, AZ) gestattet, wobei Reflexionsmittel (e, f) zur Reflexion des Hauptlaserstrahls und des Hilfslaserstrahls und erste Fühlmittel (k, q) vorgesehen sind zur Erfassung und Signalisierung der Lage des Hilfslaserstrahls, und
—zweite auf dem ersten Kardangerät vorgesehene Fühlmittel (s) zur Erfassung und Signalisierung der Position des reflektierten Hilfslaserstrahls.

2. Lagemeßanordnung nach Anspruch 1, die weiterhin aufweist:
—Distanzmeßmittel, die mit dem Hauptlaserstrahl und dem reflektierten Hauptlaserstrahl gekoppelt sind um Distanzänderungen zwischen dem Hauptlaser (a) und den Reflexionsmitteln (e, f) zu messen,
—eine erste und eine zweite Servoeinrichtung (p, o), die mit den ersten Fühlmitteln gekoppelt sind und so arbeiten, daß sie eine Drehung des ersten Kardangeräts um dessen erste und zweite Achse (EL, AZ) bewirken, um die Position des Hilfslaserstrahls auf den ersten Fühlmittel (k, q) festzuhalten, und
—eine dritte und vierte Servoeinrichtung (t, j), die mit den zweiten Fühlgliedern (s) gekoppelt sind und so arbeiten, daß sie eine Drehung des zweiten Kardangeräts um die dritte und vierte Achse (EL, AZ) verursachen um die Position des reflektierten Teils des Hilfslaserstrahls auf den zweiten Fühlmitteln (s) festzuhalten.

3. Lagemeßanordnung nach Anspruch 1, die weiterhin aufweist:
—mit dem Hauptlaserstrahl und dem zurückreflektierten Laserstrahl gekoppelt Distanzmeßmittel zur Messung von Distanzänderungen zwischen dem Laser und dem Reflexionsmitteln,
—eine erste und eine zweite Servoeinrichtung (p, o), die mit den ersten Fühlmitteln (k, q) gekoppelt sind und so arbeiten, daß sie eine Rotation des ersten Kardangeräts (5) um die erste und die zweite Achse (EL, AZ) veranlassen um die Position des Hilfslaserstrahls auf den ersten Fühlmitteln (k, q) festzuhalten, und
—eine dritte und vierte Servoeinrichtung (t, j), die mit den zweiten Fühlmitteln (s) gekoppelt sind und so arbeiten, daß sie eine Drehung des zweiten Kardangeräts (8) um die dritte und vierte Achse (EL, AZ) veranlassen um die Position des reflektierten Teils des Hilfslaserstrahls auf den zweiten Fühlmitteln (s) festzuhalten.

4. Lagemeßanordnung nach einem der Ansprüche 1 bis 3, wobei die Reflexionsmittel (e, f) einen Würfelecken-Retroreflektor (e) enthalten.

5. Lagemeßanordnung nach einem der Ansprüche 1 bis 4, wobei die Relexionsmittel (e, f) um eine fünfte Achse (θ) gedreht werden können, die senkrecht auf der dritten und vierten Achse (EL, AZ) steht.

6. Lagemeßanordnung nach Anspruch 5, wobei der Hilfslaserstrahl in einen ersten (b) und einen zweiten (a) Hilfslaserstrahl aufgeteilt ist, wobei die ersten Fühlmittel (k, q) einen Zweirichtungsfühler (q) enthalten, der zwei Lichtdetektoren (q) zur Erfassung der Lage des zweiten Hilfsstrahls (a) hat und weiterhin eine fünfte Servoeinrichtung (r) aufweisen, die mit dem Zweirichtungsfühler (qu) gekoppelt ist und so arbeitet, daß sie eine Drehung der Reflexionsmittel um die fünfte Achse (θ) bewirken um die Lage des zweiten Hilfsstrahls (a) auf dem Zweirichtungsfühler (q) festzuhalten.

7. Lagemeßanordnung nach Anspruch 6, wobei die ersten Fühlmittel (k, q) einen Vierrichtungsfühler (k) aufweisen, der vier Lichtdetektoren (k-oben, k-unten, k-links, k-rechts) hat, die um einen Knotenpunkt der Reflexionsmittel (e, f) zur Erfassung des ersten Hilfsstrahls (b) und zur für beide Achsen getrennten Steuerung der Drehung des ersten Kardangeräts (5) angeordnet sind.

8. Lagemeßanordnung nach Anspruch 7, wobei die zweiten Fühlmittel (s) einen zweiten Vierrichtungsfühler (s) enthalten, die vier Lichtdetektoren hat, die so angeordnet sind, daß sie einen reflektierten Teil des zweiten Hilfsstrahls (a) zur für beide Achsen separaten Steuerung der Drehung des zweiten Kardangeräts (5) erfassen.

9. Lagemeßanordnung nach einem der Ansprüche 1 bis 8, dei weiterhin einen Absolutlängenmess-Testaufspanntisch (12) aufweist, der eine feste Basis und einen auf der festen Basis linear bewegbaren Aufsatz (11) hat, der so eingerichtet ist, daß er das zweite Kardangerät (8) lösbar trägt.

## Revendications

1. Un dispositif de mesure de position, comprenant:

—des moyens générateurs de faisceau laser (1), disposés sur un premier appareil formant cardan à deux axes (5) permettant de faire tourner ces moyens générateurs de faisceau laser autour d'un premier et d'un second axe (EL, AZ) orthogonaux, comportant un laser principal (a) servant à produire un faisceau laser principal et un laser auxiliaire (h) servant à produire un faisceau laser auxiliaire essentiellement parallèle au faisceau laser principal,

—des moyens réflecteurs de faisceau laser (3), disposés sur un second appareil formant cardan à deux axes (8) permettant de faire tourner ces moyens réflecteurs de faisceau laser autour d'un troisième et d'un quatrième axe (EL, AZ) orthogonaux, comportant des moyens réflecteurs (e, f) servant à réfléchir le faisceau laser principal et le faisceau laser auxiliaire, et comportant des premiers moyens détecteurs (k, q) servant à détecter et signaler la position du faisceau auxiliaire, et

—des seconds moyens détecteurs (s), disposés sur le premier dispositif formant cardan, pour détecter et signaler la position du faisceau laser auxiliaire réfléchi.

2. Le dispositif de mesure de position de la revendication 1, comprenant en outre:

—des moyens de mesure de distance, couplés au faisceau laser principal et au faisceau laser principal réfléchi, servant à mesurer des variations de distance entre le laser principal (a) et les moyens réflecteurs (e, f),

—des premiers et des seconds moyens d'asservissement (p, o), couplés aux premiers moyens détecteurs (k, q) et agissant de manière à faire tourner le premier appareil formant cardan (5) autour des premier et second axes (EL, AZ) de manière à maintenir fixe la position du faisceau laser auxiliaire sur les premiers moyens détecteurs (k, q), et

—des troisièmes et des quatrièmes moyens d'asservissement (t, j), couplés aux seconds moyens détecteurs (s) et agissant de manière à faire tourner le second appareil formant cardan (8) autour des troisième et quatrième axes (EL, AZ) de manière à maintenir fixe la position de la partie réfléchie du faisceau laser auxiliaire sur les seconds moyens détecteurs (s).

3. Le dispositif de mesure de position de la revendication 1, comprenant en outre:

—des moyens de mesure de distance, couplés au faisceau laser principal et au faisceau laser rétro-réfléchi, servant à mesurer des variations de distance entre le laser et les moyens réflecteurs,

—des premiers et des seconds moyens d'asservissement (p, o), couplés aux premiers moyens détecteurs (k, q) et agissant de manière à faire tourner le premier appareil formant cardan (5) autour des premier et second axes (EL, AZ) de manière à maintenir fixe la position du faisceau laser auxiliaire sur les premiers moyens détecteurs (k, q), et

—des troisièmes et des quatrièmes moyens d'asservissement (t, j), couplés aux seconds moyens détecteurs (s) et agissant de manière à faire tourner le second appareil formant cardan (8) autour des troisième et quatrième axes (EL, AZ) de manière à maintenir fixe la position de la partie réfléchie du faisceau laser auxiliaire sur les seconds moyens détecteurs (s).

4. Le dispositif de mesure de position de l'une des revendications 1 à 3, dans lequel les moyens réflecteurs (e, f) comprennent un rétro-réflecteur en coin de cube (e).

5. Le dispositif de mesure de position de l'une des revendications 1 à 4, dans lequel on peut faire tourner les moyens réflecteurs (e, f) autour d'un cinquième axe (θ) perpendiculaire aux troisième et quatrième axes (EL, AZ).

6. Le dispositif de mesure de position de la revendication 5, dans lequel le faisceau laser auxiliaire est séparé en un premier (b) et un second (a) faisceau auxiliaire, les premiers moyens détecteurs (k, q) comportant un capteur bidirectionnel (q) avec deux détecteurs optiques (q) permettant de détecter la position du second faisceau auxiliaire (a), et comprenant également des cinquièmes moyens d'asservissement (r) couplés au capteur bi-directionnel (q) et agissant de manière à faire tourner les moyens réflecteurs autour du cinquième axe (θ) afin de maintenir fixe la position du second faisceau auxiliaire (a) sur le capteur bidirectionnel (q).

7. Le dispositif de mesure de position de la revendication 6, dans lequel les premiers moyens détecteurs (k, q) comprennent un capteur quadri-directionnel (k) comportant quatre détecteurs optiques (k-sup, k-inf, k-droit, k-gauche) disposés autour d'un point nodal des moyens réflecteurs (e, f) et servant à détecter le premier faisceau auxiliaire (b) et à commander, de façon distincte pour les deux axes, la rotation du premier appareil formant cardan (5).

8. Le dispositif de mesure de position de la revendication 7, dans lequel les seconds moyens détecteurs (s) comprennent un second capteur quadri-directionnel (s) comportant quatre détecteurs optiques disposés de manière à détecter une partie réfléchie du second faisceau auxiliaire (a) et servant à commander, de façon distincte pour les deux axes, la rotation du second appareil formant cardan (8).

9. Le dispositif de mesure de position de l'une des revendications 1 à 8, comprenant en outre un adaptateur de test à mesure de longueur absolue (12) comportant une base fixe et une potence (11) mobile linéairement sur la base fixe, la potence (11) étant conçue pour supporter de manière amovible le second dispositif formant cardan (8).

Fig. 1

Fig. 2

Fig. 3

Fig. 4

Fig. 5

θ

Fig. 6

f

shift

q

(a)

i

d₁

shift

d₂

(b)

d₃

c

laser beam from a

a

# Fig. 7

## (A)

## (B)

laser beam (a)

left sensor

right sensor

f

balance circuit

motor

r

Fig. 8

Fig. 9

Fig. 10

## Fig. 11

## Fig. 12

EL axis

AZ axis

laser beam (b)

## Fig. 13

nodal point

laser beam (b)

## Fig. 14

EL axis

k-upper

k-left

k-right

AZ axis

k-axis

balance circuit → motor I

balance circuit → motor U

## Fig. 15

a

$Z_4$

$Z_3$

$Z_2$

$Z_1$

e measuring point (nodal point)

Fig. 16

measuring point

A

Fig. 17

C

measuring point

B

AZ

EL

φ

11

7

15

a

m

Fig. 18

A

−Z

m

R

L

φ

C

−Z

B

Fig. 19

a

A

R

X

$φ_1$ $φ_3$

S

D

m

$φ_2$ R

B

Z